(19)

Europäisches
Patentamt

European
Patent Office

Office européen
des brevets

(11) **EP 2 090 606 A1**

(12) **EUROPÄISCHE PATENTANMELDUNG**

(43) Veröffentlichungstag:
**19.08.2009 Patentblatt 2009/34**

(51) Int Cl.:
*C08G 65/00* *(2006.01)*

(21) Anmeldenummer: 08151527.2

(22) Anmeldetag: **15.02.2008**

(84) Benannte Vertragsstaaten:
**AT BE BG CH CY CZ DE DK EE ES FI FR GB GR
HR HU IE IS IT LI LT LU LV MC MT NL NO PL PT
RO SE SI SK TR**
Benannte Erstreckungsstaaten:
**AL BA MK RS**

(71) Anmelder:
- **BASF SE
  67056 Ludwigshafen (DE)**
- **Albert-Ludwigs-Universität Freiburg
  79104 Freiburg (DE)**

(72) Erfinder:
- **Mühlhaupt, Rolf, Prof. Dr.
  79117 Freiburg (DE)**
- **Fiedler, Anne
  81541 München (DE)**
- **Schüler, Fabian
  79853 Lenzkirch (DE)**
- **Bruchmann, Bernd, Dr.
  67251 Freinsheim (DE)**
- **Schütte, Markus, Dr.
  49080 Osnabrück (DE)**
- **Schönfelder, Daniel, Dr.
  1000 Bruxelles (BE)**

(54) **Hochfunktionelle Polyetherole sowie deren Herstellung und Verwendung**

(57) Die vorliegende Erfindung betrifft ein Verfahren zur Herstellung von hochfunktionellen Polyetherolen indem man mindestens einen tri- oder höherfunktionellen Alkohol und gegebenenfalls weitere Alkohole und/oder Verbindungen, die mit Alkohol reaktive funktionelle Gruppen aufweisen, mit Hilfe von sauren Katalysatoren umsetzt, wobei der tri- oder höherfunktionelle Alkohol nicht Glycerin ist. Weiter betrifft die Vorliegende Erfindung hochfunktionelle Polyetherole, erhältlich nach einem solchen Verfahren und die Verwendung dieser hochfunktionellen Polyetherole als Haftvermittler, Thixotropiermittel, Rheologiemodifier von Polymeren, als Additiv in Druckfarben oder als Bausteine zur Herstellung von Polyadditions- oder Polykondensationspolymeren.

EP 2 090 606 A1

**Beschreibung**

Die vorliegende Erfindung betrifft ein Verfahren zur Herstellung von hochfunktionellen Polyetherolen indem man mindestens einen tri- oder höherfunktionellen Alkohol und gegebenenfalls weitere Alkohole und/oder Verbindungen, die mit Alkohol reaktive funktionelle Gruppen aufweisen, mit Hilfe von sauren Katalysatoren umsetzt, wobei der tri- oder höherfunktionelle Alkohol nicht Glycerin ist. Weiter betrifft die vorliegende Erfindung hochfunktionelle Polyetherole, erhältlich nach einem solchen Verfahren und die Verwendung dieser hochfunktionellen Polyetherole als Haftvermittler, Thixotropiermittel, Rheologiemodifier von Polymeren, als Additiv in Druckfarben oder als Bausteine zur Herstellung von Polyadditions- oder Polykondensationspolymeren.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erfindung zu verlassen.

Polyetherole werden üblicherweise aus der Reaktion von Wasser, Alkoholen oder Aminen durch ringöffnende Polymerisation mit Alkylenoxiden, zum Beispiel mit Ethylenoxid, Propylenoxid oder Butylenoxid oder deren Gemischen hergestellt. Technisch bedeutend sind Polyetherole auf Basis von Wasser, Glykolen, Glycerin, Trimethylolpropan, Pentaerythrit oder Zuckern als Startermolekül, die mit Ethylenoxid, Propylenoxid oder Ethylenoxid/Propylenoxid-Mischungen zu linearen Diolen oder sternförmig aufgebauten Polyolen reagieren. Solche Verfahren sind beispielsweise in Becker/ Braun, Kunststoff-Handbuch Bd. 7, Polyurethane, Carl-Hanser-Verlag, München 1993, Seiten 58 - 67, erläutert.

Die Herstellung von Polyethern auf Basis Glycerin ist ebenfalls beschrieben. So offenbart beispielsweise US 3,932,532 und DE 103 07 172 die Herstellung von hochfunktionellen Polyethern auf Basis von Glycerin unter Katalyse mit starken Alkalien zu oligomeren Polyethern. Die so erhaltenen Produkte weisen eine starke Färbung auf und sind nur schwer zu reinigen.

Weiter offenbart DE 103 07 172 auch die Polykondensation von Glycerin in Gegenwart von sauren Katalysatoren, beispielsweise HCl, $H_2SO_4$, Sulfonsäure oder $H_3PO_4$ in Abwesenheit von Wasser bei Temperaturen von 200 bis 280 °C innerhalb von 5 bis 15 Stunden. Das so erhaltene Reaktionsprodukt ist allerdings teerartig und eignet sich nicht für den Einsatz in technisch relevanten Formulierungen.

Definiert aufgebaute, hochfunktionelle hyperverzweigte Polyetherole sind erst seit kurzer Zeit bekannt.

Hyperverzweigte Polyglycerinether werden in der DE 199 47 631 und DE 102 11 664 beschrieben. Hier erfolgt die Herstellung durch ringöffnende Reaktion von Glycidol, gegebenenfalls in Gegenwart eines mehrfunktionellen Startermoleküls. Die Handhabung von Glycidol erfordert einen hohen Sicherheitsaufwand, daher ist diese Synthesestrategie kostenintensiv und für die Übertragung in einen industriellen Maßstab nur bedingt geeignet.

Hyperverzweigte Polyetherole lassen sich auch, wie beispielsweise in WO 00/56802 offenbart, herstellen, indem 1-Ethyl-1-hydroxymethyl-oxetan mit speziellen Katalysatoren ringöffnend polymerisiert wird. Das Polymergerüst besteht hier ausschließlich aus Trimethylolpropan-Einheiten. Ebenso kann 3,3 Bis(Hydroxymethyl)oxetan gemäß Nishikubo et al., Polymer Journal 2004, 36 (5) 413, ringöffnend zu einem hochverzweigten Polyetherpolyol, bestehend ausschließlich aus Pentaerythrit-Einheiten, reagieren. Chen et. al, J. Poly. Sci. Part A: Polym. Chem. 2002, 40, 1991, beschreiben eine Synthese, bei der 1-Ethyl-1-hydroxymethyl-oxetan und 3,3 Bis(Hydroxymethyl)oxetan gemeinsam ringöffnend polymerisiert werden. Hier erhält man einen Polyether aus einer Mischung von Trimethylolpropan- und Pentaerythrit-Einheiten.

Die ringöffnenden Polymerisation von Oxetanen gemäß der vorgenannten Synthesen ist sehr selektiv und im wesentlichen frei von Nebenreaktionen, daher zeichnen sich die Polymere durch eine hohe Reinheit aus. Nachteilig an diesen Methoden ist, dass die Herstellung der Oxetane als Ausgangsprodukt für die Polymerisation aufwändig ist und die Polymersynthese spezielle Reaktionsbedingungen und Katalysatoren erfordert, was die Herstellung der hochverzweigten Polyetherole im technischen Maßstab aus kommerzieller Sicht wenig attraktiv macht.

Weiterhin haben die durch ringöffnende Polymerisation erhaltenen sehr reinen, strukturell einheitlichen Polymere auch anwendungstechnische Nachteile, zum Beispiel lösen sie sich nur in ausgewählten Lösemitteln, was eine breite Verwendung dieser Polyetherole einschränkt. Aus diesem Grund gab es Bestrebungen, diese Nachteile zu beheben. So offenbart beispielsweise WO 03/062306, dass diese hochverzweigten Polyetherole als Kernmoleküle für die Umsetzung mit Alkylenoxiden genutzt werden, um über das Anbringen linearer Alkylenoxidketten das Eigenschaftsprofil positiv zu beeinflussen.

Der vorliegenden Erfindung lag daher die Aufgabe zugrunde, mittels eines technisch einfachen und preiswerten Verfahrens industriell einsetzbare, hochfunktionelle Polyetherpolyole bereitzustellen, insbesondere solche hochfunktionellen Polyetherole, deren Strukturen sich leicht an die Erfordernisse der Anwendung anpassen lassen. Weiter war es Aufgabe hochfunktionelle Polyetherpolyole zu liefern, die aufgrund ihres definierten Aufbaus vorteilhafte Eigenschaften, wie hohe Funktionalität, hohe Reaktivität, geringe Viskosität und gute Löslichkeit, in sich vereinen.

Weiter war es Aufgabe der vorliegenden Erfindung, ein Verfahren zur Herstellung dieser hochfunktionellen Polyetherole zu liefern.

Die Aufgabe konnte durch ein Verfahren gelöst werden, bei dem man mindestens einen tri- oder höherfunktionellen Alkohol und gegebenenfalls weitere Alkohole und/oder Verbindungen, die mit Alkohol reaktive funktionelle Gruppen aufweisen, mit Hilfe von sauren Katalysatoren umsetzt, wobei kein Glycerin als trifunktioneller Alkohol eingesetzt wird.

Unter einem hochfunktionellen Polyetherol ist im Rahmen dieser Erfindung ein Produkt zu verstehen, das neben den Ethergruppen, die das Polymergerüst bilden, end- oder seitenständig mindestens drei, bevorzugt mindestens sechs, besonders bevorzugt mindestens zehn OH-Gruppen aufweist. Dabei kann das Polymergerüst linear oder verzweigt sein. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polyetherole der vorliegenden Erfindung weisen zumeist nicht mehr als 500 end- oder seitenständige funktionelle Gruppen, bevorzugt nicht mehr als 100 end- oder seitenständige funktionelle OH-Gruppen auf.

In einer Ausführungsform handelt es sich bei den hochfunktionellen Polyestern um hyperverzweigte Polyetherole. Unter hyperverzweigten Polyetherpolyolen werden im Rahmen dieser Erfindung unvernetzte Polymermoleküle mit Hydroxyl- und Ethergruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch lineare Bereiche mit funktionellen Seitengruppen aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Unter "hyperverzweigt" wird im Zusammenhang mit der vorliegenden Erfindung verstanden, dass der Verzweigungsgrad (Degree of Branching, DB), dass heißt die mittlere Anzahl dendritischer Verknüpfungen plus mittlere Anzahl der Endgruppen pro Molekül, geteilt durch die Summe der mittlere Anzahl von dendritischen, linearen und terminalen Verknüpfungen, multipliziert mit 100, 10 bis 99.9 %, bevorzugt 20 bis 99 %, besonders bevorzugt 20 - 95 % beträgt. Unter "dendrimer" wird im Zusammenhang mit der vorliegenden Erfindung verstanden, daß der Verzweigungsgrad 99,9 - 100% beträgt. Zur Definition des "Degree of Branching" siehe H. Frey et al., Acta Polym. 1997, 48,30.

Als Tri- und höherfunktionelle Alkohole können zum Beispiel Triole, wie Trimethylolmethan, Trimethylolethan, Trimethylolpropan, 1,2,4-Butantriol, Tris-hydroxymethylisocyanurat, Tris-hydroxyethyl-isocyanurat (THEIC) eingesetzt werden. Ebenso können Tetrole verwendet werden, wie Bis-Trimethylolpropan (Di-TMP) oder Pentaerythrit. Weiterhin können höherfunktionelle Polyole, wie Bis-Pentaerythrit (Di-Penta) oder Inositole verwendet werden. Weiterhin können auch Alkoxylierungsprodukte von den vorgenannten Alkoholen sowie von Glycerin verwendet werden, vorzugsweise mit 1-40 Alkylenoxideinheiten pro Molekül. Besonders bevorzugt werden als Tri- und höherfunktionelle Alkohole aliphatische Alkohole und insbesondere solche mit primären Hydroxylgruppen eingesetzt, wie Trimethylolmethan, Trimethylolethan, Trimethylolpropan, Di-TMP, Pentaerythrit, Di-Penta und deren Alkoxylate mit 1 - 30 Ethylenoxideinheiten pro Molekül sowie Glycerin-Ethoxylate mit 1-30 Ethylenoxideinheiten pro Molekül verwendet. Ganz besonders bevorzugt werden verwendet Trimethylolpropan, Pentaerythrit und deren Ethoxylate mit im Mittel 1 - 20 Ethylenoxideinheiten pro Molekül sowie Glycerin-Ethoxylate mit 1-20 Ethylenoxideinheiten pro Molekül. Ebenfalls können die genannten Alkohole in Mischung eingesetzt werden.

Weniger geeignet als Tri- und höherfunktionelle Alkohole sind Verbindungen, die an zwei unmittelbar benachbarten C-Atomen OH-Gruppen tragen. Diese Verbindungen neigen unter erfindungsgemäßen Bedingungen zu Eliminierungsreaktionen, die gegenüber der Veretherungsreaktion bevorzugt sein können. Die sich bildenden ungesättigten Verbindungen bilden unter erfindungsgemäßen Veretherungsbedingungen Nebenprodukte, die dazu führen, dass das Reaktionsprodukt für den Einsatz in technisch relevanten Formulierungen unbrauchbar ist. Insbesondere treten solche Nebenreaktionen bei Glycerin auf.

Die tri- und höherfunktionellen Alkohole können auch in Mischung mit difunktionellen Alkoholen eingesetzt werden. Beispiele geeigneter Verbindungen mit zwei OH-Gruppen umfassen Ethylenglykol, Diethylenglykol, Triethylenglykol, 1,2- und 1,3-Propandiol, Dipropylenglykol, Tripropylenglykol, Neopentylglykol, 1,2-, 1,3- und 1,4-Butandiol, 1,2-, 1,3- und 1,5-Pentandiol, Hexandiol, Cyclopentandiol, Cyclohexandiol, Cyclohexandimethanol, Bis(4-Hydroxycyclohexyl) methan, Bis(4-Hydroxycyclohexyl)ethan, 2,2- Bis(4-Hydroxycyclohexyl)propan, difunktionelle Polyetherpolyole auf Basis von Ethylenoxid, Propylenoxid, Butylenoxid oder deren Gemischen, oder Polytetrahydrofuran. Selbstverständlich können difunktionelle Alkohole auch in Mischungen eingesetzt werden.

Die Diole dienen zur Feineinstellung der Eigenschaften des Polyetherpolyols. Falls difunktionelle Alkohole eingesetzt werden, wird das Verhältnis von difunktionellen Alkoholen zu den tri- und höherfunktionellen Alkoholen vom Fachmann je nach den gewünschten Eigenschaften des Polyethers festgelegt. Im Regelfall beträgt die Menge des oder der difunktionellen Alkohole 0 bis 99 mol %, bevorzugt 0 - 80, besonders bevorzugt 0 - 75 mol% und ganz besonders bevorzugt 0 - 50 mol% bezüglich der Gesamtmenge aller Alkohole. Dabei können durch im Laufe der Reaktion abwechselnde Zugabe von tri- und höherfunktionellen Alkoholen und Diolen auch Blockcopolyether, beispielsweise Diol-terminierte Polyether erhalten werden.

Erfindungsgemäß können auch difunktionelle Alkohole zu OH-terminierten Oligomeren vorkondensiert und anschließend der tri- oder höherfunktionelle Alkohol zugegeben werden. Auf diese Weise können ebenfalls hyperverzweigte Polymere mit linearen Blockstrukturen erhalten werden.

Weiter können auch Monoole zur Regelung der OH-Funktionalität während oder nach der Umsetzung der tri- und höherfunktionellen Alkohole zugegeben werden. Solche Monoole können beispielsweise lineare oder verzweigtkettige aliphatische oder aromatische Monoole sein. Vorzugsweise weisen diese mehr als 3, besonders bevorzugt mehr als 6 C-Atome auf. Weiterhin geeignet als Monoole sind monofunktionelle Polyetherole. Vorzugsweise werden maximal 50 mol-% Monool, bezogen auf die Gesamtmenge des tri- und höherfunktionellen Aklohols zugegeben.

Zur Beschleunigung der Reaktion werden saure Katalysatoren oder Katalysatorgemische zugegeben. Geeignete Katalysatoren sind zum Beispiel Säuren mit einem pKs-Wert von weniger als 2,2, besonders bevorzugt sind starke Säuren.

Beispiel für Säuren mit einem $pK_S$-Wert von weniger als 2,2 sind beispielsweise Phosphorsäure ($H_3PO_4$), Phosphorige Säure ($H_3PO_3$), Pyrophosphorsäure ($H_4P_2O_7$), Polyphosphorsäure, Hydrogensulfat ($HSO_4^-$), Schwefelsäure ($H_2SO_4$), Perchlorsäure, Salzsäure, Bromwasserstoffsäure, Chlorsulfonsäure, Methansulfonsäure, Trichlormethansulfonsäure, Trifluormethansulfonsäure, Benzolsulfonsäure oder p-Toluolsulfonsäure.

Weitere Beispiele für erfindungsgemäße saure Katalysatoren sind saure Ionenaustauscher oder Ionenaustauscherharze. Ionenaustauscher ist die Sammelbezeichnung für feste Stoffe oder Flüssigkeiten, welche fähig sind, positiv oder negativ geladene Ionen aus einer Elektrolyt-Lösung unter Abgabe äquivalenter Mengen anderer Ionen aufzunehmen. Bevorzugt werden feste Körner und Partikel verwendet, deren Matrix durch Kondensation (Phenol-Formaldehyd) oder durch Polymerisation (Copolymere aus Styrol und Divinylbenzol sowie Methacrylaten und Divinylbenzol) erhalten wurden.

Die erfindungsgemäß verwendeten sauren Ionenaustauscher tragen zum Beispiel Sulfonsäure-Gruppen, Carbonsäure- oder Phosphonsäure-Gruppen. Auch können Ionenaustauscher verwendet werden, die ein hydrophiles Cellulose-Gerüst besitzen oder aus vernetztem Dextran oder Agarose bestehen, und saure funktionelle Gruppen, zum Beispiel Carboxylmethyl- oder Sulfoethylgruppen, tragen. Es können auch anorganische Ionenaustauscher, wie Zeolite, Montmorillonite, Palygorskite, Bentonite und andere Aluminiumsilicate, Zirconiumphosphat, Titanwolframat und Nickelhexacyanoferrat(II) verwendet werden. Zu Ionenaustauschern siehe auch RÖMPP, Chemisches Lexikon, Online Version 3.0, oder "Ion Exchangers" von F. De Dardel und T. V. Arden, erschienen in Ullmann's Encyclopedia of Industrial Chemistry, Electronic Release 2007. Saure Ionenaustauscher sind beispielsweise in fester oder gelöster Form erhältlich unter den Produktbezeichnungen Amberlite™, Ambersept™ oder Amberjet™ von der Fa. Rohm und Haas.

Besonders bevorzugt als erfindungsgemäße Katalysatoren sind Phosphorsäure, Polyphosphorsäure, Chlorsulfonsäure, Methansulfonsäure, Trichlormethansulfonsäure, Trifluormethansulfonsäure, Benzolsulfonsäure, p-Toluolsulfonsäure oder saure Ionenaustauscher.

Ganz besonders bevorzugt sind Methansulfonsäure, Trifluormethansulfonsäure, p-Toluolsulfonsäure oder saure Ionenaustauscher.

Die Zugabe der Säure als Katalysator erfolgt im allgemeinen in einer Menge von 50 ppm bis 10 Gew.-%, bevorzugt von 100 ppm bis 5 Gew.-%, besonders bevorzugt 1000 ppm bis 3 Gew.-% bezogen auf die Menge des eingesetzten Alkohols oder Alkoholgemisches.

Wird ein sauer Ionenaustauscher als Katalysator verwendet, so setzt man üblicherweise eine Menge von 1000 ppm bis 30 Gew.-%, bevorzugt von 1 - 25 Gew.-%, besonders bevorzugt 1 - 20 Gew.-% bezogen auf die Menge des eingesetzten Alkohols oder Alkoholgemisches zu. Selbstverständlich können die Katalysatoren auch in Mischung eingesetzt werden.

Ferner ist es möglich, sowohl durch Zugabe des geeigneten Katalysators, als auch durch Wahl einer geeigneten Temperatur die Polykondensationsreaktion zu steuern. Weiterhin lässt sich über die Zusammensetzung der Ausgangskomponenten und über die Verweilzeit das mittlere Molekulargewicht des Polymeren sowie dessen Struktur einstellen.

Die Umsetzung erfolgt üblicherweise bei einer Temperatur von 0 bis 300 °C, bevorzugt 0 bis 250°C, besonders bevorzugt bei 60 bis 250°C und ganz besonders bevorzugt bei 80 bis 250°C in Substanz oder in Lösung. Dabei können allgemein alle Lösungsmittel verwendet werden, die gegenüber den jeweiligen Edukten inert sind. Wird Lösungsmittel eingesetzt, werden vorzugsweise organische Lösungsmittel, wie zum Beispiel Decan, Dodecan, Benzol, Toluol, Chlorbenzol, Xylol, Dimethylformamid, Dimethylacetamid oder Solventnaphtha verwendet.

In einer besonders bevorzugten Ausführungsform wird die Kondensationsreaktion in Substanz durchgeführt, das heißt ohne Zugabe von Lösungsmittel. Das bei der Reaktion freiwerdende Wasser kann zur Beschleunigung der Reaktion aus dem Reaktionsgleichgewicht entfernt werden, zum Beispiel destillativ, gegebenenfalls bei vermindertem Druck.

Die Herstellung der erfindungsgemäßen hochfunktionellen Polyetherpolyole erfolgt zumeist in einem Druckbereich von 0,1 mbar bis 20 bar, bevorzugt bei 1 mbar bis 5 bar, in Reaktoren, die im Batchbetrieb, halbkontinuierlich oder kontinuierlich betrieben werden.

Bevorzugt wird die Reaktion in einer sogenannten "Eintopffahrweise" durchgeführt, in der das Monomer vollständig vorgelegt und die Reaktion in einem rückvermischten Reaktor durchgeführt wird. Denkbar sind aber auch Reaktionsführungen in einem mehrstufigen Reaktorsystem, beispielsweise einer Rührkesselkaskade oder einem Rohrreaktor. In einer bevorzugten alternativen Ausführungsform der vorliegenden Erfindung kann die Reaktion in einem Kneter, Extruder, Intensivmischer oder Schaufeltrockner durchgeführt werden.

Die Reaktion kann gegebenenfalls auch unter Zuhilfenahme von Ultraschall oder Mikrowellenstrahlung durchgeführt werden.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Kondensationsprodukt lagerstabil ist.

Weiterhin kann man den Katalysator deaktivieren, zum Beispiel durch Zugabe einer basischen Komponente, wie einer Lewis-Base oder einer organischen oder anorganischen Base.

In einer weiteren bevorzugten Ausführungsform können die erfindungsgemäßen Polyetherole neben den bereits durch die Reaktion erhaltenden OH-Gruppen weitere funktionelle Gruppen enthalten. Dabei können die Verbindungen, die mit Alkohol reaktive funktionelle Gruppen aufweisen, vor oder während dem Umsetzen der tri- oder höherfunktionellen Alkohole zum hochfunktionellen Polyether zugegeben werden.

Setzt man zusammen mit dem mindestens einen tri- oder höherfunktionellen Alkohol sowie gegebenenfalls weiteren Alkoholen Verbindungen, die mit Alkohol reaktive, von OH-Gruppen verschiedene funktionelle Gruppen aufweisen, in einem Schritt um, so erhält man ein Polyether-Polymer mit statistisch verteilten, von den Hydroxylgruppen verschiedenen Funktionalitäten. Eine derartige Funktionalisierung lässt sich zum Beispiel durch Zusatz von Verbindungen erzielen, die Mercaptogruppen, primäre, sekundäre oder tertiäre Aminogruppen, Estergruppen, Carbonsäuregruppen oder deren Derivate, Sulfonsäuregruppen oder deren Derivate, Phosphonsäuregruppen oder deren Derivate, Silangruppen, Siloxangruppen, Arylreste oder kurz- oder langkettige Alkylreste tragen.

Für die Modifikation mit Mercaptogruppen lässt sich zum Beispiel Mercaptoethanol einsetzten. Tertiäre Aminogruppen lassen sich zum Beispiel durch Einbau von aminogruppenhaltigen Alkoholen, wie Triethanolamin, Tripropanolamin, Triisopropanolamin, N-Methyldiethanolamin, N-Methyldipropanolamin oder N,N-Dimethylethanolamin erzeugen. Durch Zugabe von Dicarbonsäuren, Tricarbonsäuren, Dicarbonsäureestern, wie beispielsweise Adipinsäure, Terephthalsäuredimethylester oder Tricarbonsäureestern lassen sich Estergruppen erzeugen. Weiterhin können Estergruppen durch Umsetzung der OH-Gruppen mit Lactonen, speziell mit Caprolacton, erhalten werden. Durch Reaktion mit langkettigen Alkanolen oder Alkandiolen lassen sich langkettige Alkylreste einbringen. Die Reaktion mit Alkyl- oder Arylisocyanaten, - diisocyanaten oder - oligoisocyanaten generiert entsprechende Urethangruppen aufweisende Polyether.

Eine nachträgliche Funktionalisierung kann man erhalten, indem das erhaltene hochfunktionelle, hoch- oder hyperverzweigte Polyetherpolyol in einem zusätzlichen Verfahrensschritt mit einem geeigneten Funktionalisierungsreagenz, welches mit den OH-Gruppen des Polyethers reagieren kann, umsetzt.

Die erfindungsgemäßen hochfunktionellen Polyether können zum Beispiel durch Zugabe von Säure-, Säurehalogenid- oder Isocyanatgruppen enthaltenden Molekülen modifiziert werden. Weiterhin lassen sich beispielsweise Säuregruppen enthaltende Polyether durch Umsetzung der OH-Gruppen mit Anhydridgruppen enthaltenden Verbindungen erhalten. Estergruppen lassen sich nachträglich beispielsweise durch Umsetzung mit Caprolacton einführen. Dabei kann die Länge der Esterketten durch die Einsatzmenge an Caprolacton gesteuert werden.

Weiterhin können die erfindungsgemäßen hochfunktionelle Polyetherole auch durch Umsetzung mit Alkylenoxiden, zum Beispiel Ethylenoxid, Propylenoxid, Butylenoxid oder deren Gemischen, in hochfunktionelle Polyetherpolyole enthaltend lineare Polyetherketten mit einstellbarer Polarität überführt werden.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

In einer weiteren bevorzugten Ausführungsform wird das Umsetzungsprodukt durch strippen, dass heißt durch Entfernen von niedermolekularen, flüchtigen Verbindungen, gereinigt. Dazu kann nach Erreichen des gewünschten Umsatzgrades der Katalysator deaktiviert werden. Anschließend werden die niedermolekularen flüchtigen Bestandteile, zum Beispiel Lösungsmittel, Ausgangsmonomere, leichtflüchtige Spaltprodukte, leichtflüchtige oligomere oder cyclische Verbindungen oder Wasser destillativ, gegebenenfalls unter Einleitung eines Gases, vorzugsweise Stickstoff, Kohlendioxid oder Luft, gegebenenfalls bei vermindertem Druck, entfernt. In einer bevorzugten Ausführungsform wird das Produkt in einem Dünnschichtverdampfer von flüchtigen Bestandteilen befreit.

Aufgrund der Beschaffenheit der Ausgangsmonomere ist es möglich, dass aus der Umsetzung Kondensationsprodukte mit unterschiedlichen Strukturen resultieren können, die Verzweigungen und cyclische Einheiten, aber keine Vernetzungen aufweisen. Die Anzahl der reaktiven Gruppen ergibt sich dabei aus der Beschaffenheit der eingesetzten Monomere und dem Polykondensationsgrad, der erfindungsgemäß so zu wählen ist, dass der Gelpunkt nicht erreicht wird.

Die erfindungsgemäßen Polyetherpolyole auf Basis Trimethylolpropan weisen geringere Molmassen, geringere Abbautemperaturen und niedrigere Glastemperaturen als Produkte auf, die durch ringöffnende Polymerisation erhalten werden.

Weiterhin können erfindungsgemäße Produkte, die aus TMP-Einheiten aufgebaut sind, Molekülteile aufweisen, bei denen die OH-Gruppen einer endständigen TMP-Einheit als Formaldehydacetal vorliegen. Der Gehalt an Acetalgruppen kann mit Hilfe der Reaktionsbedingungen für die erfindungsgemäßen Polyetherpolyole eingestellt werden.

Die nach dem erfindungsgemäßen Verfahren gebildeten hochfunktionellen hochverzweigten Polyether lösen sich gut in verschiedenen Lösemitteln, zum Beispiel in Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Ein großer Vorteil des erfindungsgemäßen Verfahren liegt in seiner Wirtschaftlichkeit. Sowohl die Umsetzung zu dem Polykondensationsprodukt als auch die Reaktion der Kondensationsprodukte zu Polyethern mit anderen funktionellen Gruppen oder Elementen kann in einer Reaktionsvorrichtung erfolgen, was technisch und wirtschaftlich vorteilhaft ist.

Die erfindungsgemäßen hochfunktionellen hoch- oder hyperverzweigten Polyetherole können u.a. als Haftvermittler, Thixotropiermittel, Rheologiemodifier von Polymeren, als Additiv in Druckfarben oder als Bausteine zur Herstellung von Polyadditions- oder Polykondensationspolymeren, zum Beispiel von Lacken, Überzügen, Klebstoffen, Dichtmassen, Gießelastomeren oder Schaumstoffen technisch vorteilhaft eingesetzt werden.

Sie eignen sich insbesondere zur Herstellung von Druckfarben, wie Flexo-, Tief-, Offset- oder Siebduckfarben sowie zur Herstellung von Drucklacken. Insbesondere sind die erfindungsgemäßen Polyether zur Herstellung von dünnflüssigen Druckfarben, wie Flexo- oder Tiefdruckfarben für den Verpackungsdruck geeignet. Sie können zu verschiedenen Zwecken in Druckfarben eingesetzt werden, aber insbesondere als Bindemittel, ggf. auch im Gemisch mit anderen Bindemitteln.

Die erfindungsgemäßen Polyether werden zu diesem Zweck mit geeigneten Lösemitteln, Farbmitteln, optional weiteren Bindemitteln sowie druckfarbentypischen Zusatzstoffen formuliert. Zu weiteren Einzelheiten zur Formulierung und Herstellung von Druckfarben mit hyperverzweigten Polymeren wird ausdrücklich auf WO 02/36695 sowie WO 02/26697 verwiesen, insbesondere auf die Ausführungen in WO 02/36695, Seite 10, Zeile 19 bis Seite 15, Zeile 14 sowie WO 02/36697, Seite 7, Zeile 14 bis Seite 10, Zeile 18 sowie die in den besagten Schriften aufgeführten Beispiele.

Druckfarben, welche die erfindungsgemäßen Polyether enthalten, weisen eine besonders gute, bislang nicht bekannte, Haftung auf den Substraten, insbesondere auf Metall- und/oder Polymerfolien auf.

Die Druckfarben eignen sich daher auch ganz besonders zur Herstellung von Laminaten aus zwei oder mehreren Polymer- und/oder Metallfolien, bei denen eine Folie mit einer oder mehreren Schichten einer Druckfarbe bedruckt und auf die gedruckte Schicht eine zweite Folie aufkaschiert wird. Derartige Verbunde werden beispielsweise zur Herstellung von Verpackungen eingesetzt.

Die vorliegende Erfindung soll anhand der nachfolgenden Beispiele näher erläutert werden.

Beispiel 1: Herstellung eines erfindungsgemäßen Polyetherpolyols auf Basis Trimethylolpropan

Die Polykondensation wurde in einem 2 L Glaskolben, ausgerüstet mit Rührer und Destillationsbrücke durchgeführt. Die Mischung aus 990 g Trimethylolpropan und 10 g p-Toluolsulfonsäure (1 Gew.-%) wurden mittels Ölbad auf 200°C erwärmt und bei Normaldruck unter diesen Bedingungen für 6 h gerührt, wobei Wasser und flüchtige Nebenprodukte abdestilliert wurden. Danach ließ man die Reaktionsmischung abkühlen und versetzte sie mit 2 l Methanol. Zur Neutralisation des sauren Katalysators wurde die Lösung mit 4.5 g Zinkoxid versetzt, über Nacht gerührt, unlösliche Bestandteile über Celite abfiltriert und die Reaktionsmischung anschließend am Rotationsverdampfer bei 40°C und einem Unterdruck von bis zu 22 mbar zur Trockne eingedampft. Das Rohprodukt wurde danach in 1.5 L Isohexan gelöst , unlösliche Bestandteile über Celite abfiltriert und die Reaktionsmischung anschließend erneut am Rotationsverdampfer bei 40°C und einem Unterdruck von bis zu 22 mbar zur Trockne eingedampft .Das Rohprodukt wurde anschließend bei 100 °C aufgeschmolzen und zur Entfernung von flüchtigen Bestandteilen und unreagiertem TMP über einen Dünnschichtverdampfer bei einer Öltemperatur von 130°C und einem Druck von $1*10^{-1}$ mbar gereinigt. Man erhielt 420 g (43 Gew.-%) Polyetherpolyol.

Das Produkt wies folgende Kennzahlen auf:

Tg (10°C/min): - 32 °C
$M_w/M_n$ (GPC; DMF): 710/540 [g/mol]
Verzweigungsgrad: 60 %
OHZ: 304 mg KOH/g

Beispiel 2: Herstellung eines erfindungsgemäßen Polyetherpolyols auf Basis Trimethylolpropan

Die Polykondensation wurde in einem 2 L Glaskolben, ausgerüstet mit Rührer, einer Vigreux-Kolonne mit absteigendem Kühler und Vakuumanschluß, durchgeführt. Die Mischung aus 990 g Trimethylolpropan und 10 g p-Toluolsulfonsäure (1 Gew.-%) wurde evakuiert und bei einem Druck von 20 mbar mittels Ölbad auf 170°C erwärmt. Nach Erreichen der Reaktionstemperatur wurde das Gemisch 18 h bei dieser Temperatur gerührt und flüchtige Komponenten abdestilliert. Danach ließ man die Reaktionsmischung unter Vakuum abkühlen und versetzte sie mit 2 l Methanol. Zur Neutralisation des sauren Katalysators wurde nun 4.5 g Zinkoxid zugegeben, über Nacht gerührt, unlösliche Bestandteile über Celite abfiltriert und das Reaktionsgemisch anschließend am Rotationsverdampfer bei 40°C und einem Unterdruck von bis zu 22 mbar zur Trockne eingedampft. Das Rohprodukt wurde anschließend zur Entfernung von Nebenprodukten und unreagiertem TMP durch Vakuumdestillation (210°C Ölbadtemperatur, 5.4*10$^{-2}$ mbar) gereinigt. Man erhielt 620 g (62 Gew.-%) Polyetherpolyol als Sumpfprodukt.

Das Produkt wies folgende Kennzahlen auf:

Tg (10°C/min): - 9 °C
$M_w/M_n$ (GPC; DMF): 1510/840 [g/mol]
Verzweigungsgrad: 68 %
OHZ: 421 mg KOH/g

Beispiel 3: Herstellung eines erfindungsgemäßen Polyetherpolyols auf Basis Trimethylolpropan

Die Polykondensation wurde in einem 1 L Glaskolben, ausgerüstet mit Rührer, einer Vigreux-Kolonne mit absteigendem Kühler und Vakuumanschluss, durchgeführt. Die Mischung aus 450 g Trimethylolpropan und 50 g lonenaustauscher Amberlite™ IR 120 der Fa. Rohm&Haas (10 Gew.-%, festes Material, aus wässriger Lösung getrocknet) wurde evakuiert und bei einem Druck von 12 mbar mittels Ölbad auf 200°C erwärmt. Nach Erreichen der Reaktionstemperatur wurde das Gemisch 24 h bei dieser Temperatur gerührt und flüchtige Komponenten abdestilliert. Danach ließ man die Reaktionsmischung unter Vakuum abkühlen und gab 1 l Methanol zu. Nach Abfiltrieren des lonentauschers wurde das Reaktionsgemisch am Rotationsverdampfer bei 40°C und einem Unterdruck von bis zu 22 mbar zur Trockne eingedampft. Das Rohprodukt wurde anschließend zur Entfernung von Nebenprodukten und unreagiertem TMP durch zweimaliges Destillieren am Dünnschichtverdampfer bei einer Öltemperatur von 195°C und einem Druck von 1-5*10$^{-2}$ mbar gereinigt. Man erhielt 183 g (41 Gew.-%) Polyetherpolyol.

Das Produkt wies folgende Kennzahlen auf:

$T_g$(10°C/min): - 13 °C
$M_w/M_n$ (GPC; DMF): 1100/900 [g/mol]
OHZ: 617 mgKOH/g
Verzweigungsgrad: 31 %

Beispiel 4: Herstellung eines erfindungsgemäßen Polyetherpolyols auf Basis Trimethylolpropan (TMP) und Triethylenglykol (TEG)

Die Polymerisation wurde in einem 250 mL Glaskolben, ausgerüstet mit einem Rührer, Rückflußkühler und einer Destillationsbrücke mit Vakuumanschluß durchgeführt. Die Mischung aus 25 g Trimethylolpropan (0.19 mol), 28 g Triethylenglykol (0.19 mol) und 1.1 g lonenaustauscher Amberlite™ IR 120 (2 Gew.-%, festes Material, aus wässriger Lösung getrocknet) wurde evakuiert und bei einem Druck von 12 mbar langsam mittels Ölbad auf 160°C erwärmt. Nach Erreichen der Reaktionstemperatur wurde das Reaktionsgemisch 24 h gerührt und flüchtige Bestandteile mittels Destillation entfernt. Danach ließ man die Reaktionsmischung unter Vakuum abkühlen. Das Rohprodukt wurde in Methanol aufgenommen, der lonentauscher abfiltriert und die Reaktionslösung anschließend am Rotationsverdampfer bei 40°C und einem Unterdruck von bis zu 22 mbar zur Trockne eingedampft. Das Rohprodukt wurde dann zur Entfernung von flüchtigen Nebenprodukten und unreagierten Einsatzstoffen zweimal mittels Dünnschichtverdampfer bei einer Öltemperatur von 195°C und einem Druck von 1-5*10$^{-2}$ mbar gereinigt. Man erhielt 22.5 g (43 Gew.-%) des Polyetherols.

Das Reaktionsprodukt wies folgende Kennzahlen auf:

Tg (10°C/min): - 60 °C
$M_w/M_n$ (GPC; DMF): 1110/760 [g/mol]

Beispiel 5: Herstellung eines erfindungsgemäßen Polyetherpolyols auf Basis Trimethylolpropan und Pentaerythrit (PE)

Die Polymerisation wurde in einem 1 L Glaskolben, ausgerüstet mit Rührer und einer Vigreux-Kolonne mit Destillationsbrücke und Vakuumanschluß durchgeführt. Die Mischung aus 350 g Trimethylolpropan (2.61 mol), 100 g Pentaerythrit (0.74 mol) und 50 g lonenaustauscher Amberlite™ IR 120 (10 Gew.-%, festes Material, aus wässriger Lösung getrocknet) wurde evakuiert und bei einem Druck von 12 mbar mittels Ölbad auf 200°C aufgeheizt. Nach Erreichen der Reaktionstemperatur wurde das Gemisch für 24 h gerührt. Danach ließ man die Reaktionsmischung unter Vakuum abkühlen. Das Rohprodukt wurde in Methanol aufgenommen, der Ionentauscher und unreagiertes Pentaerythrit abfiltriert und die Reaktionslösung am Rotationsverdampfer bei 40°C und einem Unterdruck von bis zu 22 mbar zur Trockne eingedampft. Das Rohprodukt wurde anschließend zur Entfernung von flüchtigen Nebenprodukten und unreagierten Einsatzstoffen zweimal mit einem Dünnschichtverdampfer bei einer Öltemperatur von 195°C und einem Druck von $1\text{-}5*10^{-2}$ mbar gereinigt. Man erhielt 236 g (58 Gew.-%) Polyetherol.

Das Produkt wies folgende Kennzahlen auf:

Tg (10°C/min): - 9 °C
$M_w/M_n$ (GPC; DMF) 670/560 [g/mol]

Beispiel 6: Herstellung eines erfindungsgemäßen Polyetherpolyols auf Basis Pentaerythrit und Triethylenglykol

Die Polymerisation wurde in einem 1 L Glaskolben ausgerüstet mit einem Rührer, Rückflußkühler und einer Destillationsbrücke mit Vakuumanschluß durchgeführt. Die Mischung aus 225.9 g Pentaerythrit (1.66 mol), 249.1 g Triethylenglykol (1.66 mol) und 4.8 g p-Toluolsulfonsäure Monohydrat (1 Gew.-%) wurde evakuiert und bei einem Druck von 12 mbar langsam mittels Ölbad auf 200°C erwärmt. Nach Erreichen der Reaktionstemperatur wurde das Reaktionsgemisch 15 h gerührt. Danach ließ man die Reaktionsmischung unter Vakuum abkühlen. Das Rohprodukt wurde in 1 L Methanol aufgenommen und unumgesetztes Pentaerythrit abfiltriert. Zur Neutralisation wurde der Reaktionslösung 10 g basisches Aluminiumoxid (MP ALUMINA B ACTIVITY SUPER I; 04571, MP Ecochrom) zugegeben, 2 h gerührt und über Nacht bei -20 °C inkubiert. Nach dem Auftauen wurden unlösliche Bestandteile über Celite abfiltriert und die Reaktionsmischung anschließend am Rotationsverdampfer bei 40°C und einem Unterdruck von bis zu 22 mbar zur Trockne eingedampft. Das Rohprodukt wurde zur Entfernung von unreagiertem Ethylenglykol zweimal mittels Dünnschichtverdampfer bei einer Öltemperatur von 195°C und einem Druck von $1\text{-}5*10^{-2}$ mbar gereinigt. Man erhielt 248 g (52 Gew.-%) Polyetherpolyol.

Das Produkt wies folgende Kennzahlen auf:

Tg (10°C/min): -36 °C
$M_w/M_n$ (GPC; DMF) 4820/1540 [g/mol]
OHZ: 539 mgKOH/g

Beispiel 7: Herstellung eines erfindungsgemäßen Polyetherpolyols auf Basis Pentaerythrit

Die Polymerisation wurde in einem 250 mL Glaskolben ausgerüstet mit einem Rührer, einer Vigreux-Kolonne mit absteigendem Kühler und Vakuumanschluß Rückflußkühler. 49.75 g Pentaerythrit (0.37 mol) und 0.25 g p-Toluolsulfonsäure Monohydrat (1 Gew.-%) wurde evakuiert und bei einem Druck von 12 mbar mittels Ölbad auf 210°C erwärmt. Nach Erreichen der Reaktionstemperatur wurde das Reaktionsgemisch 30 min gerührt. Danach ließ man die Reaktionsmischung unter Vakuum abkühlen. Das Rohprodukt wurde in Wasser aufgenommen, 1 h refluxiert und heiß filtriert. Der Rückstand wurde bei 80 °C im Vakuumtrockenschrank getrocknet. Man erhielt 17.91 g (36 Gew.-%) Polyetherpolyol. Für NMR- und GPC- Messungen wurde das Produkt mit Essigsäureanhydrid acetyliert.

Das Produkt wies folgende Kennzahlen auf:

Tg (10°C/min): 32 °C
$M_w/M_n$ (GPC; $CHCl_3$): 3310/1600 [g/mol]
Verzweigungsgrad: 56.5 %

Beispiel 8: Herstellung eines erfindungsgemäßen Polyetherpolyols auf Basis Trimethylolpropan, statistisch verethert mit 3 Mol Ethylenoxid

Die Polykondensation wurde in einem 250 mL Glaskolben, ausgerüstet mit Rührer, einer Vigreux-Kolonne mit absteigendem Kühler und Vakuumanschluß, durchgeführt. Die Mischung aus 45 g Trimethylolpropan, statistisch verethert mit 3 Mol Ethylenoxid, und 5 g Ionenaustauscher Amberlite™ IR 120 der Fa. Rohm&Haas (10 Gew.-%, festes Material, aus wässriger Lösung getrocknet) wurde evakuiert und bei einem Druck von 12 mbar mittels Ölbad auf 200°C erwärmt. Nach Erreichen der Reaktionstemperatur wurde das Gemisch 24 h bei dieser Temperatur gerührt und flüchtige Komponenten abdestilliert. Danach ließ man die Reaktionsmischung unter Vakuum abkühlen und gab 200 ml Methanol zu. Nach Abfiltrieren des Ionentauschers wurde das Reaktionsgemisch am Rotationsverdampfer bei 40°C und einem Unterdruck von bis zu 22 mbar zur Trockne eingedampft. Das Rohprodukt wurde anschließend durch Vakuumdestillation (210°C Ölbadtemperatur, 5.4*10$^{-2}$ mbar) gereinigt. Man erhielt 28 g (62 Gew.-%) Polyetherpolyol als Sumpfprodukt.

Das Produkt wies folgende Kennzahlen auf:

Tg (10°C/min): - 62 °C
$M_w/M_n$ (GPC; DMF): 1350/1150 [g/mol]

Beispiel 9: Herstellung eines erfindungsgemäßen Derivates eines Polyetherpolyols auf Basis von Trimethylolpropan, acetyliert mit Essigsäureanhydrid

0.50 g des Polymers aus Beispiel 3 und 5 mg p-Toluolsulfonsäure Monohydrat (1 Gew.-%) wurden in 10 mL Essigsäureanhydrid für 4 h refluxiert. Danach wurde die Lösung am Rotationsverdampfer bei 40°C und einem Unterdruck von bis zu 22 mbar zur Trockne eingedampft, in 30 mL Chloroform aufgenommen und die Lösung in einem Scheidetrichter dreimal mit 20 mL Wasser ausgeschüttelt. Die organische Phase wurde mit MgSO$_4$ getrocknet, filtriert, das Filtrat am Rotationsverdampfer bei 40°C und einem Unterdruck von bis zu 22 mbar zur Trockne eingedampft und über Nacht bei 80 °C in einem Vakuumtrockenschrank getrocknet. Man erhielt 0.73 g derivatisiertes Polyetherpolyol.

Das Produkt wies folgende Kennzahlen auf:

$M_w/M_n$ (GPC; CHCl$_3$): 1000/740 [g/mol]

Beispiel 10: Herstellung eines erfindungsgemäßen Derivates eines Polyetherpolyols auf Basis Pentaerythrit und Triethylenglykol, acetyliert mit Essigsäureanhydrid

0.50 g des Polymers aus Beispiel 6 wurde in 10 mL Essigsäureanhydrid für 4 h refluxiert. Danach wurde die Lösung am Rotationsverdampfer bei 40°C und einem Unterdruck von bis zu 22 mbar zur Trockne eingedampft und über Nacht bei 80 °C in einem Vakuumtrockenschrank getrocknet. Man erhielt 0.68 g derivatisiertes Polyetherpolyol.

Das Produkt wies folgende Kennzahlen auf:

$T_g$(10°C/min): -54 °C
$M_w/M_n$ (GPC; CHCl$_3$): 4820/1540 [g/mol]

Beispiel 11: Herstellung eines erfindungsgemäßen Derivates eines Polyetherpolyols auf Basis Trimethylolpropan und Methylstearat

163 g des Polymers aus Beispiel 3 wurden mit 344.5 g Methylstearat und 5.1 g Dibutylzinndilaurat (1 Gew.-%) für 72 h bei 170 °C gerührt. Dabei entstehendes MeOH wurde destillativ abgetrennt. Das Rohprodukt wurde anschließend durch Vakuumdestillation (210°C Ölbadtemperatur, 5.4*10$^{-2}$ mbar) gereinigt. Man erhielt 351.2 g derivatisiertes Polyetherpolyol als Sumpfprodukt.

Das Produkt wies folgende Kennzahlen auf:

$T_m$ (10°C/min): 33 °C
$M_w/M_n$ (GPC; CHCl$_3$): 1520/1240 [g/mol]
Derivatisierungsgrad: 44 %

Beispiel 12: Herstellung eines erfindungsgemäßen Derivates eines Polyetherpolyols auf Basis Trimethylolpropan und Methylstearat

200 g des Polymers aus Beispiel 3 wurden mit 668.7 g Methylstearat und 8.8 g Dibutylzinndilaurat (1 Gew.-%) für 72 h bei 170 °C gerührt. Dabei entstehendes MeOH wurde destillativ abgetrennt. Das Rohprodukt wurde anschließend durch Vakuumdestillation (210°C Ölbadtemperatur, 5.4*10$^{-2}$ mbar) gereinigt. Man erhielt 772.0 g derivatisiertes Polyetherpolyol als Sumpfprodukt.

Das Produkt wies folgende Kennzahlen auf:

$T_m$ (10°C/min): 38 °C
$M_w/M_n$ (GPC; CHCl$_3$): 2510/2160 [g/mol]
Derivatisierungsgrad: 100 %

Beispiel 13: Herstellung eines erfindungsgemäßen Derivates eines Polyetherpolyols auf Basis Pentaerythrit und Triethylenglykol und Methylstearat

30 g des Polymers aus Beispiel 6 wurden mit 35 g Methylstearat und 0.66 g Dibutylzinndilaurat (1 Gew.-%) für 72 h bei 170 °C gerührt. Dabei entstehendes MeOH wurde destillativ abgetrennt. Das Rohprodukt wurde anschließend durch Vakuumdestillation (210°C Ölbadtemperatur, 5.4*10$^{-2}$ mbar) gereinigt. Man erhielt 64 g derivatisiertes Polyetherpolyol als Sumpfprodukt.
Das Produkt wies folgende Kennzahlen auf:

$T_m$ (10°C/min): 44 °C
$M_w/M_n$ (GPC; $CHCl_3$): 4740/2420 [g/mol]
Derivatisierungsgrad: 45 %

Beispiel 14: Herstellung eines erfindungsgemäßen Derivates eines Polyetherpolyols auf Basis Pentaerythrit und Triethylenglykol und Methylstearat

20 g des Polymers aus Beispiel 6 wurden mit 67 g Methylstearat und 0.87 g Dibutylzinndilaurat (1 Gew.-%) für 72 h bei 170 °C gerührt. Dabei entstehendes MeOH wurde destillativ abgetrennt. Das Rohprodukt wurde anschließend durch Vakuumdestillation (210°C Ölbadtemperatur, 5.4*10$^{-2}$ mbar) gereinigt. Man erhielt 68.5 g derivatisiertes Polyetherpolyol als Sumpfprodukt.
Das Produkt wies folgende Kennzahlen auf:

$T_m$ (10°C/min): 42 °C
$M_w/M_n$ (GPC; $CHCl_3$): 3370/3028 [g/mol]
Derivatisierungsgrad: 80 %

Beispiel 15: Herstellung eines erfindungsgemäßen Derivates eines Polyetherpolyols auf Basis Pentaerythrit und Triethylenglykol mit 2,2-Dimethoxypropan - Acetalisierung

2 g eines Polymers aus Beispiel 6 wurde mit 4.75 mL 2,2-Dimethoxypropan (38.4 mmol, ca. 2 eq. pro OH Gruppe) und 0.14 mL Methansulfonsäure (1.92 mmol, ca. 10 mol % der OH Gruppen) für 3 d bei Raumtemperatur gerührt. Das Rohprodukt wurde anschließend mit 0.75 mL Pyridin versetzt und bei 40°C und einem Unterdruck von bis zu 22 mbar am Rotationsverdampfer zu Trockne eingeengt. Der Rückstand wurde in 20 mL THF aufgenommen, filtriert und das Filtrat und bei 40°C und einem Unterdruck von bis zu 22 mbar am Rotationsverdampfer zu Trockne eingeengt. Man erhielt 2.1 g derivatisiertes Polyetherpolyol.
Das Produkt wies folgende Kennzahlen auf:

$T_m$ (10°C/min): - 48 °C
Derivatisierungsgrad: 50 %

Beispiel 16 (Vergleichsbeispiel): Herstellung eines Polyetherpolyols auf Basis Glycerin

Die Polykondensation wurde in einem 500 mL Glaskolben, ausgerüstet mit Rührer und Destillationsbrücke durchgeführt. Die Mischung aus 100 g Glycerin und 1 g p-Toluolsulfonsäure (1 Gew.-%) wurden mittels Ölbad auf 200°C erwärmt und bei Normaldruck unter diesen Bedingungen über 1,5 h gerührt, wobei Wasser und flüchtige Nebenprodukte (ca. 30g) abdestillierten. Danach ließ man die Reaktionsmischung abkühlen. Es wurde ein schwarzes, teerartiges, stechend riechendes Produkt erhalten, das sich für einen Einsatz in technisch relevanten Formulierungen nicht eignete.

Beispiel 17 (Vergleichsbeispiel): Polyetherpolyol auf Basis 1-Ethyl-1-hydroxymethyloxetan gemäß Yan et al., Macromolecules 2003, 36, 9667

Es werden 5.4 ml Bortrifluorid-Etherat (43.1 mmol) und über $CaH_2$ getrocknetes und unter Argon destilliertes Dichlormethan (100 ml) vorgelegt und bei RT gerührt. 50 g 3-Ethyl-3-Hydroxymethyloxetan (43.1 mmol) werden innerhalb von 4 h mit Hilfe einer Spritzenpumpe des Modells PERFUSOR® (Flussrate: 12,5 ml/Std.) langsam zugetropft. Die Reaktionsmischung wird über einen Zeitraum von insgesamt 48 h bei RT gerührt. Der Reaktionsabbruch erfolgt durch Zugabe von 10 ml Ethanol, danach lässt man für weitere 1-2 h rühren. Die Lösung wird anschließend bei 70°C und einem Unterdruck von bis zu 350 mbar am Rotationsverdampfer zu Trockne eingeengt, der Rückstand mit 15-20 ml Ethanol versetzt und bei 60 °C gerührt bis eine homogene Lösung entstanden ist. Zuletzt wird das Polymer in 200 ml Wasser gefällt. Das Produkt wird für mehrere Tage bei 80 °C im Vakuum getrocknet. Es werden 45 g (90 %) eines farblosen Feststoffs erhalten.

Das Produkt wies folgende Kennzahlen auf:

Tg (10°C/min): 24 °C
$T_m$ (10°C/min): 54 °C (nur 1. Aufheizkurve)
$M_w/M_n$ (GPC; $CHCl_3$): 6240/3900 (berechnet aus der Molmasse des modifizierten Polyethers nach Beispiel 18)
Verzweigungsgrad: 54 %

Beispiel 18 (Vergleich) Trifluoracetylierung von Poly(3-Ethyl-3-Hydroxymethyloxetan) gemäß Beispiel 17

Es wurde 1 g des Polyether-Polyols nach Beispiel 17 mit 10 ml Trifluoressigsäureanhydrid versetzt und die Mischung für 4 h bei 50 °C unter Rückfluss gerührt. Anschließend wurde das Produkt durch Einengen im Vakuum von niedermolekularen Reaktionsrückständen befreit und anschließend über Nacht bei 60 °C im Vakuum getrocknet.

Das Produkt wies folgende Kennzahlen auf:

$M_w/M_n$ (GPC; $CHCl_3$): 7900/4970 [g/mol]

Beispiel 19: Vergleich der Eigenschaften der erfindungsgemäßen Polyether mit einem Polyether des Standes der Technik

Die erfindungsgemäßen Polyetherpolyole auf Basis Trimethylolpropan weisen geringere Molmassen, geringere Abbautemperaturen und niedrigere Glastemperaturen als das Literatursystem auf.

Weiterhin weisen die erfindungsgemäßen Produkte TMP Einheiten auf, die als Formaldehydacetal vorliegen. Der Gehalt an Acetalgruppen kann mit Hilfe der Reaktionsbedingungen für die erfindungsgemäßen Polyetherpolyole eingestellt werden. Das Literatursystem hingegen weist keine Acetal-Funktionalitäten auf.

Tabelle 1: Löslichkeitsverhalten von je 100 mg der erfindungsgemäßen Polyetherpolyole auf Basis Trimethylolpropan und dem Literatursystem in 3 mL Lösemittel bei Raumtemperatur.

| Polymer aus Bsp | Wasser | Methanol | Pyridin | Essigester | Aceton | THF | Chloroform | Toluol |
|---|---|---|---|---|---|---|---|---|
| 1 | - | + | + | + | + | + | + | + |
| 2 | - | + | + | - | + | + | + | - |
| 3 | - | + | + | - | + | + | - | - |
| 17 | - | - | + | - | - | + | - | - |

+ : löslich
-: nicht löslich

Die erfindungsgemäßen Polyetherpolyole auf Basis Trimethylolpropan weisen eine deutlich bessere Löslichkeit als das Literatursystem auf, das in vielen gängigen Lösemitteln wie Methanol und Aceton unlöslich ist. Dies kann zum einen auf das Vorhandensein der Formaldehydacetale als auch auf die geringeren Molmassen der erfindungsgemäßen Polyetherpolyole zurückgeführt werden (siehe Tabelle 1). Die Löslichkeit der erfindungsgemäßen Polyetherpolyole in unpolaren Lösemitteln steigt mit der Anzahl der eingebauten TMP Einheiten, die als Formaldehydacetal vorliegen.

Analytik:

$^1$H und $^{13}$C NMR Spektren wurden an einem Bruker® ARX300 Gerät bei 300/75 MHz in DMSO-$d_6$ und $CDCl_3$ aufgenommen. Die Lösemittelsignale wurden auf 2.50 ppm für $^1$H und 39.51 ppm für $^{13}$C für DMSO-$d_6$ und auf 7.26 ppm für $^1$H und 77.0 ppm für $^{13}$C für $CDCl_3$ kalibriert.

Verzweigungsgrade wurden aus quantitativen $^{13}$C NMR Spektren der mit Essigsäureanhydrid acetylierten Produkte bestimmt, wobei inverse gated decoupling, 4000 Scans, ein pulse delay von 3,1 Sekunden und eine sehr geringe Menge $Cr(acac)_3$ als Relaxations Reagenz benutzt wurde. Integriert wurden jeweils die quartären Kohlenstofatome. Der Verzweigungsgrad wurde nach Literatur bekannten Formeln für $AB_2$ und $AB_3$ Systeme berechnet (H. Frey et al., Acta Polym. 1997, 48, 30). Bei Systemen die TEG Einheiten enthalten, konnte der Verzweigungsgrad wegen unbekannter Länge der inneren Ethylenglykoleinheiten nicht bestimmt werden.

Molekulargewichte und Molekulargewichtsverteilungen wurden mit GPC gegen Polystyrolstandards bestimmt.

GPC Messungen wurden bei 30 °C in Chloroform oder DMF mit PSS-SDVB Säulen (5 $\mu$m Partikel, $10^3$-, $10^4$-, $10^5$-, $10^6$-Å) durchgeführt. Die Polymerkonzentration betrug etwa 2 mg/ml.

Die DSC- Messung erfolgte mit einem Wärmeflusskalorimeter DSC-7 der Firma Perkin-Elmer. Hierzu wurden 5-7 mg der Probe in einen Aluminiumtiegel eingewogen und in einem Temperaturbereich von -100 bis + 100 °C bei einer Heiz und Kühlrate von 10 K·min$^{-1}$ gemessen. Tg und $T_m$ wurden aus der zweiten Aufheizkurve bestimmt.

Umsetzungsgrade wurden aus $^1$H NMR Spektren nach Umsetzung mit Trichloroacetylisocyanat (Moad et. al. Polymer 2006, 47, 1899) oder aus quantitativen $^{13}$C NMR Spektren bestimmt.

Als Filtrierhilfe wurde Celite® 545 der Firma MERCK genutzt.

Die Hydroxyzahl wurde nach folgender Vorschrift bestimmt:

1. Herstellung des Acylierungsgemisches: Es wurden Phthalsäureanhydrid (257.0 g, 1.74 mol) in eine 2l Braunglasflasche eingewogen. Nun wurden 1800 ml Pyridin und 40 ml N-Methylimidazol zugegeben. Dieses Gemisch wurde über Molsieb gelagert und mind. 24h vor der ersten Verwendung hergestellt.

2. Bestimmung des Blindwertes $V_{Blind}$: 25 ml Acylierungsgemisch wurden in einen 250 ml Einhalskolben pipettiert und mit Pyridin (25 ml) und dest. $H_2O$ (50 ml) versetzt. Die Mischung wurde 10 min gerührt und anschließend mit NaOH (1 N) gegen Phenolphthalein titriert. Der Blindversuch wurde 2 mal titriert, wobei $V_{Blind}$=50,2 ml erhalten wurde.

3. Bestimmung der OH-Zahl ($V_{Probe}$): Es wurden 1,500 g der Hydroxylkomponente in einen 250 ml Einhalskolben eingewogen. Dazu wurden 25 ml Acylierungsgemisch pipettiert. Die Mischung wurde 10 min unter Rückfluss gekocht (130°C). Danach wurde diese Mischung für 10 min im Eisbad gekühlt und mit Pyridin (25 ml) und dest. $H_2O$ (50 ml) versetzt und gut durchmischt. Die Probe wurde mit NaOH (1 N) gegen Phenolphthalein titriert. Diese Prozedur wurde solange wiederholt bis die Abweichung geringer als 0.2 ml betrug. Die erhaltenen Volumina ($V_{Blind}$, $V_{Probe}$) wurden in folgende Gleichung eingesetzt:

$$OHZ = \frac{(V_{Blind} - V_{Probe})}{m_{Probe}} \cdot 56{,}1 = \frac{mg KOH}{g\, Probe}$$

**Patentansprüche**

1. Verfahren zur Herstellung von hochfunktionellen Polyetherolen indem man mindestens einen tri- oder höherfunktionellen Alkohol und gegebenenfalls weitere Alkohole und/oder Verbindungen, die mit Alkohol reaktive funktionelle Gruppen aufweisen, mit Hilfe von sauren Katalysatoren umsetzt, wobei der tri- oder höherfunktionelle Alkohol nicht Glycerin ist.

2. Verfahren nach Anspruch 1, **dadurch gekennzeichnet, dass** die Temperatur bei der Umsetzung zwischen 80 und 250 °C liegt.

3. Verfahren nach Anspruch 1 oder 2, **dadurch gekennzeichnet, dass** die Umsetzung ohne Zugabe von Lösemitteln erfolgt.

4. Verfahren nach einem der Ansprüche 1 bis 3, **dadurch gekennzeichnet, dass** als saure Katalysatoren Säuren mit einem pKs-Wert von weniger als 2,2 eingesetzt werden.

5. Verfahren nach einem der Ansprüche 1 bis 3, **dadurch gekennzeichnet, dass** als saure Katalysatoren saure Ionentauscherharze mit einem pKs-Wert von weniger als 2,2 eingesetzt werden.

6. Verfahren nach einem der Ansprüche 1 bis 5, **dadurch gekennzeichnet, dass** keine Verbindungen, die mit Alkohol reaktive funktionelle Gruppen aufweisen, eingesetzt werden.

7. Verfahren nach einem der Ansprüche 1 bis 5, **dadurch gekennzeichnet, dass** man mindestens einen tri- oder höherfunktionellen Alkohol und Verbindungen, die mit Alkohol reaktive funktionelle Gruppen aufweisen, sowie gegebenenfalls weitere Alkohole in einem Schritt mit Hilfe von sauren Katalysatoren umsetzt.

8. Verfahren nach Anspruch 7, **dadurch gekennzeichnet, dass** als Verbindungen, die mit Alkohol reaktive funktionelle Gruppen aufweisen, aminogruppen aufweisende Alkohole, Dicarbonsäuren, Tricarbonsäuren, Dicarbonsäureester, Tricarbonsäureester oder isocyanatgruppen aufweisende Verbindungen eingesetzt werden.

9. Verfahren nach einem der Ansprüche 1 bis 5, **dadurch gekennzeichnet, dass** in einem ersten Schritt tri- oder höherfunktionelle Alkohole sowie gegebenenfalls weitere Alkohole mit Hilfe saurer Katalysatoren zu hochfunktionellen Polyethern umgesetzt werden und in einem zweiten Schritt die erhaltenen hochfunktionellen Polyether mit Verbindungen, die mit Alkohol reaktive funktionelle Gruppen aufweisen funktionalisiert werden.

10. Verfahren nach Anspruch 9, **dadurch gekennzeichnet, dass** als Verbindungen, die mit Alkohol reaktive funktionelle Gruppen aufweisen, Säuregruppen oder deren Derivate (Anhydride) aufweisende Verbindungen, Säurehalogenidgruppen, Aldehyde und Ketone aufweisende Verbindungen, Epoxygruppen aufweisende Verbindungen oder Isocyanatgruppen aufweisende Verbindungen eingesetzt werden.

11. Hochfunktionelles Polyetherol, erhältlich nach einem Verfahren gemäß Anspruch 1 bis 10.

12. Verwendung eines Polyetherole nach Anspruch 11 als Haftvermittler, Thixotropiermittel, Rheologiemodifier von Polymeren, als Additiv in Druckfarben oder als Bausteine zur Herstellung von Polyadditions- oder Polykondensationspolymeren.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2004/074346 A (CLARIANT GMBH [DE]; ZERRER RALF [DE]; SCHERL FRANZ-XAVER [DE]) 2. September 2004 (2004-09-02) * Seite 4, Zeilen 9-17; Ansprüche 1-5 * Beispiel S. 4/5 ----- | 1-12 | INV. C08G65/00 |
| X | EP 0 141 253 A (UNION CARBIDE CORP [US]) 15. Mai 1985 (1985-05-15) * Ansprüche 1-18; Beispiele 2,3 * ----- | 1-12 | |
| X | DE 44 46 877 A1 (HENKEL KGAA [DE]) 4. Juli 1996 (1996-07-04) * Beispiele 1,2 * Anspruch 1 zusammen mit Seite 3 Zeilen 51-66, insbesondere Zeilen 65-66 ----- | 1-12 | |
| X | US 5 728 796 A (LIAO ZENG K [US] ET AL) 17. März 1998 (1998-03-17) Ansprüche 1,14 zusammen mit Spalte 3 Zeile 64 - Spalte 4 Zeile 7 ----- | 1-12 | RECHERCHIERTE SACHGEBIETE (IPC) C08G |

Der vorliegende Recherchenbericht wurde für alle Patentansprüche erstellt

| Recherchenort | Abschlußdatum der Recherche | Prüfer |
|---|---|---|
| München | 12. August 2008 | Kositza, Matthias |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
    Dokument

EPO FORM 1503 03.82 (P04C03)

# EP 2 090 606 A1

**ANHANG ZUM EUROPÄISCHEN RECHERCHENBERICHT
ÜBER DIE EUROPÄISCHE PATENTANMELDUNG NR.**   EP 08 15 1527

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-08-2008

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| WO | 2004074346 | A | 02-09-2004 | DE | 10307172 | A1 | 19-05-2005 |
| EP | 0141253 | A | 15-05-1985 | AU | 575856 | B2 | 11-08-1988 |
| | | | | AU | 3354784 | A | 04-04-1985 |
| | | | | BR | 8404821 | A | 13-08-1985 |
| | | | | CA | 1248134 | A1 | 03-01-1989 |
| | | | | JP | 1055656 | B | 27-11-1989 |
| | | | | JP | 1569979 | C | 10-07-1990 |
| | | | | JP | 60092324 | A | 23-05-1985 |
| | | | | US | 4581470 | A | 08-04-1986 |
| DE | 4446877 | A1 | 04-07-1996 | WO | 9620234 | A1 | 04-07-1996 |
| US | 5728796 | A | 17-03-1998 | CA | 2177174 | A1 | 29-06-1995 |
| | | | | CN | 1138338 | A | 18-12-1996 |
| | | | | DE | 69420047 | D1 | 16-09-1999 |
| | | | | DE | 69420047 | T2 | 25-11-1999 |
| | | | | EP | 0736052 | A1 | 09-10-1996 |
| | | | | JP | 9507254 | T | 22-07-1997 |
| | | | | WO | 9517445 | A1 | 29-06-1995 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3932532 A
- DE 10307172
- DE 19947631
- DE 10211664
- WO 0056802 A
- WO 03062306 A
- WO 0236695 A
- WO 0226697 A
- WO 0236697 A

**In der Beschreibung aufgeführte Nicht-Patentliteratur**

- **Becker ; Braun.** Kunststoff-Handbuch Bd. 7, Polyurethane. Carl-Hanser-Verlag, 1993, vol. 7, 58-67
- **Nishikubo et al.** *Polymer Journal,* 2004, vol. 36 (5), 413
- **Chen.** *J. Poly. Sci. Part A: Polym. Chem.,* 2002, vol. 40, 1991
- **P.J. Flory.** *J. Am. Chem. Soc.,* 1952, vol. 74, 2718
- **H. Frey et al.** *Chem. Eur. J.,* 2000, vol. 6 (14), 2499
- **H. Frey et al.** *Acta Polym.,* 1997, vol. 48, 30
- **Moad.** *Polymer,* 2006, vol. 47, 1899